# EUROPÄISCHE PATENTSCHRIFT

(11) **EP 3 623 231 B1**
(45) Veröffentlichungstag und Bekanntmachung des Hinweises auf die Patenterteilung: **13.03.2024**
(21) Anmeldenummer: 19195045.0
(22) Anmeldetag: 03.09.2019
(51) Int. Cl.: B60R 25/0215

(54) **ANORDNUNG ZUR BEREITSTELLUNG EINER NOTBREMSFUNKTION BEI EINER SICHERHEITSVORRICHTUNG EINES FAHRZEUGES**
ARRANGEMENT FOR PROVIDING AN EMERGENCY BRAKING FUNCTION IN A SAFETY DEVICE OF A VEHICLE
DISPOSITIF DE FOURNITURE D'UNE FONCTION DE FREINAGE D'URGENCE SUR UN DISPOSITIF DE SÉCURITÉ D'UN VÉHICULE

(30) Priorität: 11.09.2018 DE 102018122140
(43) Veröffentlichungstag der Anmeldung: 18.03.2020
(73) Patentinhaber: Huf Hülsbeck & Fürst GmbH & Co. KG, 42551 Velbert (DE)
(72) Erfinder: Salam, Okan, 45257 Essen (DE); Patzelt, Lothar, 42579 Heiligenhausen (DE)
(74) Vertreter: Bals & Vogel Patentanwälte PartGmbB

(56) Entgegenhaltungen:
- DE-A1-102011 086 648
- DE-A1-102013 113 317
- FR-A1- 2 801 263
- US-A1- 2005 104 452

## Beschreibung

Die vorliegende Erfindung betrifft eine Anordnung zur Bereitstellung einer Notbremsfunktion bei einer Sicherheitsvorrichtung eines Fahrzeuges. Ferner bezieht sich die Erfindung auf ein Verfahren zur Bereitstellung einer Notbremsfunktion bei einer Sicherheitsvorrichtung eines Fahrzeuges.

Es ist aus dem Stand der Technik bekannt, dass bei Fahrzeugen zur Diebstahlsicherung ein Sperrelement wie ein Sperrbolzen zur Sperrung einer Lenksäule des Fahrzeuges genutzt wird. Das Sperrelement dient entsprechend in einer Verriegelungsstellung dazu, die Bewegung der Lenksäule und damit das Lenken des Fahrzeuges zu verhindern. Hingegen kann bei einem berechtigten Zugriff das Sperrelement in eine Entriegelungsstellung überführt werden, in welcher die Bewegung der Lenksäule freigegeben ist.

Um das Sperrelement in die verschiedenen Stellungen zu überführen, ist es ferner bekannt, das Sperrelement motorisiert zu bewegen. Hierzu wird in der Regel über eine Elektronik des Fahrzeuges ein Motor angesteuert, welcher das Sperrelement antreibt. Dies ermöglicht im Normalfall eine sehr genaue Steuerung der Bewegung des Sperrelements, insbesondere einer Linearbewegung von der Ent- in die Verriegelungsstellung und/oder umgekehrt. Um in der gewünschten Position das Sperrelement anzuhalten, wird der Motor im Normalfall entsprechend durch die Elektronik zum Bremsen angesteuert, z. B. durch das Initiieren eines Kurzschlusses beim Motor als aktive Motorbremsung.

Ferner ist aus der DE 10 2013 113 317 A1 bekannt, eine elektrisch betätigte Lenkschlossreinrichtung vorzusehen, die ein Verriegelungselement, einen elektrischen Motor, eine Motorantriebssteuerung, einen Mikrocomputer und eine vorgeordnete ECU aufweist. Außerdem vorgesehen sind ein erstes Mittel zur Erfassung der Entriegelungsposition, sowie ein Stromzuführungsmittel für die Beobachtung, mit welchem bei der Fahrt des Fahrzeugs dem ersten Mittel zur Erfassung der Entriegelungsposition der Strom zugeführt wird. Zusätzlich weist die Lenkschlosseinrichtung ein erstes Mittel zur Beobachtung eines Defektes auf, welches mittels der Stromzuführung aus dem Stromzuführungsmittel für die Beobachtung ein aus dem ersten Mittel zur Erfassung der Entriegelungsposition ausgebendes Signal beobachtet, wobei durch die vorgeordnete ECU der Stromzuführungsweg zugeschaltet und ein Defektdiagnoseanforderungssignal zum Mikrocomputer ausgegeben wird, falls das Nichtentriegelungssignal, das die Entfernung des Verriegelungselementes von der Entriegelungsposition darstellt, vom ersten Mittel zur Beobachtung eines Defektes erfasst wird.

Allerdings kann bei Störungen der Elektronik die Bremsung nicht mehr in der gewünschten Form durchgeführt werden. Bspw. kann bei einem Ausfall der Spannungsversorgung der Elektronik der Kurzschluss beim Motor nicht mehr zuverlässig geschaltet werden. Ein Nachlaufen des Motors kann zudem dazu führen, dass das Sperrelement weiterbewegt wird.

Es ist daher eine Aufgabe der vorliegenden Erfindung, die voranstehend beschriebenen Nachteile zumindest teilweise zu beheben. Insbesondere ist es eine Aufgabe der vorliegenden Erfindung, einen elektronischen Sicherheitsmechanismus vorzuschlagen, durch welchen eine Bremsung, insbesondere eine aktive Motorbremsung, des Sperrelements auch im Fehlerfall gewährleistet ist.

Die voranstehende Aufgabe wird gelöst durch eine Anordnung mit den Merkmalen des unabhängigen Vorrichtungsanspruchs und durch ein Verfahren mit den Merkmalen des unabhängigen Verfahrensanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Anordnung beschrieben sind selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch eine Anordnung, insbesondere elektrische und/oder elektronische Schaltungsanordnung, zur Bereitstellung einer Notbremsfunktion bei einer Sicherheitsvorrichtung in der Form einer Lenksäulenverriegelung eines Fahrzeuges.

Die Notbremsfunktion ist vorteilhafterweise eine elektronisch implementierte Funktion bei einer elektronischen Motorsteuerung. Die Anordnung kann hierzu in einem Steuergerät oder in einer elektronischen Schaltung oder dergleichen des Fahrzeuges vorgesehen sein.

Das Fahrzeug ist vorzugsweise ein Kraftfahrzeug, insbesondere ein Personenkraftfahrzeug, und bevorzugt ein Elektrofahrzeug oder Hybridfahrzeug. Auch weitere Ausbildungen für das Fahrzeug sind denkbar, z. B. als Motorrad oder Lastkraftfahrzeug. Das Fahrzeug kann ein passives oder aktives Zugangssystem aufweisen, durch welches bspw. anhand einer Authentifizierung eines mobilen Identifikationsgebers ein berechtigter Zugriff festgestellt wird. Wenn der berechtigte Zugriff positiv festgestellt wird, kann eine Freigabe bei der Sicherheitsvorrichtung initiiert werden. Hierzu wird ein Sicherheitsmechanismus der Sicherheitsvorrichtung angetrieben, bspw. durch eine Ansteuerung einer Antriebseinheit wie eines Motors, der Sicherheitsvorrichtung ein Sperrelement zur Lenksäulenverriegelung von einer Verriegelungsstellung in eine Entriegelungsstellung überführt. In der Verriegelungsstellung kann die Bewegung der Lenksäule durch das Sperrelement blockiert sein. In der Entriegelungsstellung ist entsprechend diese Blockierung aufgehoben. Umgekehrt kann somit ein Verriegeln und damit ein Diebstahlschutz bei dem Fahrzeug dadurch stattfinden, dass die Antriebseinheit das Sperrelement von der Entriegelungsstellung in die Verriegelungsstellung überführt. In beiden Fällen wird das Sperrelement von einer Anfangsposition in eine Endposition bewegt, sodass zum Abschluss der Bewegung eine Bremsung der Antriebseinheit und damit auch des Sperrelements notwendig ist. Da dies auch im Fehlerfall gewährleistet werden soll, kann die Notbremsfunktion zusätzlich zu dieser Bremsung im Normalfall eine Bremsung im Fehlerfall bereitstellen. Der Fehlerfall ist bspw. durch das Vorliegen einer Störung der Elektronik des Fahrzeuges, insbesondere der Anordnung und/oder einer (Haupt-) Energieversorgung der Anordnung, gekennzeichnet. Im Normalfall liegt entsprechend diese Störung nicht vor.

Zur Bereitstellung der Notbremsfunktion kann die erfindungsgemäße Anordnung die nachfolgenden Teilanordnungen (Schaltungen) und/oder Komponenten aufweisen, welche vorzugsweise jeweils als elektronische Teilanordnung bzw. Komponente ausgeführt sind und/oder zur Bereitstellung der jeweils beschriebenen Funktion miteinander verschaltet sein:
- eine elektronische Kontrollanordnung zur Ansteuerung einer Antriebseinheit, um in einem Normalbetrieb (insbesondere im Normalfall) einen Sicherheitsmechanismus der Sicherheitsvorrichtung anzutreiben, wobei vorzugsweise die Kontrollanordnung zur Initiierung einer Bremsung der (und/oder durch die) Antriebseinheit (in dem Normalbetrieb) ausgeführt ist,
- eine elektronische Überwachungsanordnung zur Überwachung der Kontrollanordnung, um in Abhängigkeit von der Überwachung von dem Normalbetrieb in einen Fehlerbetrieb umzuschalten, insbesondere bei einer Detektion eines Fehlerfalls anhand der Überwachung,
- eine Notbremsanordnung, um die Bremsung der (und/oder durch die) Antriebseinheit im Fehlerbetrieb zu initiieren,
wobei die Überwachungsanordnung mit der Notbremsanordnung verschaltet ist, um im Fehlerbetrieb die Notbremsanordnung zur Bremsung zu aktivieren. Damit wird der Vorteil erzielt, dass zusätzlich zur Kontrollanordnung noch eine weitere Instanz, nämlich die Notbremsanordnung, die Bremsung initiieren kann. Es kann sich dabei um die gleiche Bremsung oder um eine andersartig durchgeführte Notbremsung handeln. Die Überwachungsanordnung erfasst z. B. einen Fehlerindikator, wie einen Spannungswert einer Hauptenergieversorgung und/oder eine Funktion der Kontrollanordnung, um bei einer Abweichung dieser Erfassung von einer Vorgabe die Notbremsanordnung und damit die Bremsung zu initiieren. Somit ist stets gewährleistet, dass der Fehlerfall erkannt wird und sodann in den Fehlerbetrieb zur Durchführung der Bremsung gewechselt wird. Ein Nachlaufen der Antriebseinheit und damit ein weiteres Antreiben des Sicherheitsmechanismus (z. B. einer Bewegung eines Sperrelements der Sicherheitsvorrichtung) kann somit verhindert werden.

Insbesondere wird im Rahmen der Erfindung unter der Bremsung (auch Notbremsung) der Antriebseinheit ein Verlangsamen oder vollständiges Stoppen der Antriebseinheit verstanden. Alternativ oder zusätzlich wird unter der Bremsung (auch Notbremsung) der Antriebseinheit das (sich aus dem Verlangsamen oder Stoppen der Antriebseinheit sich ergebende) Bremsen (zumindest Verlangsamen bzw. Stoppen) des Sicherheitsmechanismus, insbesondere eines Sperrelements, verstanden. Das Bremsen soll damit ein Stoppen des Sicherheitsmechanismus bewirken, um einen bestimmten Aufenthaltsbereich für das Sperrelement einzuhalten.

Es kann dabei möglich sein, dass die Überwachungsanordnung zumindest teilweise in der Kontrollanordnung, insbesondere in einer Kontrolleinheit der Kontrollanordnung, integriert ist. Bspw. ist die Kontrolleinheit als Mikrocontroller oder dergleichen ausgeführt, sodass die Überwachungsanordnung Teil der Peripherie des Mikrocontrollers sein kann. Auch ist es möglich, dass die Überwachungsanordnung zumindest teilweise Elemente aufweist, welche extern von der Kontrollanordnung und/oder Kontrolleinheit ausgeführt sind. So kann die Überwachungsanordnung eine Überwachungseinheit wie einen Watchdog aufweisen. Es ist z. B. denkbar, dass eine solche Überwachungseinheit in die Kontrolleinheit integriert ist und damit durch die Kontrolleinheit selbst bereitgestellt wird, um die Funktion der Kontrolleinheit zu überwachen, oder auch extern von der Kontrolleinheit mit der Kontrolleinheit für diese Überwachung verschaltet ist.

Die Notbremsanordnung kann ebenfalls ggf. separat (extern) von der Kontrollanordnung ausgebildet sein und in die Kontrollanordnung bzw. Kontrolleinheit integriert sein.

Das Umschalten von dem Normalbetrieb in den Fehlerbetrieb erfolgt bspw. durch eine Ansteuerung der Notbremsanordnung durch die Überwachungsanordnung, wie durch die Ausgabe eines bestimmten elektrischen Signals (z. B. Low oder High oder eines Wegfalls einer elektrischen Spannung) an wenigstens einem Signalausgang der Überwachungsanordnung. In anderen Worten ist die Überwachungsanordnung über den Signalausgang mit der Notbremsanordnung verschaltet, um im Fehlerbetrieb die Notbremsanordnung für die Bremsung zu aktivieren. Hierzu kann die Notbremsanordnung mit der Antriebseinheit verschaltet sein, insbesondere zur Ansteuerung von Schalteinheiten der Antriebseinheit mit diesen Schalteinheiten verschaltet sein.

Vorteilhafterweise kann die Antriebseinheit als Motor, vorzugsweise Elektromotor, bevorzugt Gleichstrommotor ausgeführt sein. Die Antriebseinheit kann über ein Getriebe mit einem Sperrelement verbunden sein, um zur Bereitstellung des Sicherheitsmechanismus dieses Sperrelement (je nach Drehrichtung der Antriebseinheit) in zwei entgegengesetzte Richtungen zu bewegen. Der Sicherheitsmechanismus wird z. B. auf diese Weise angetrieben. Dabei kann die Antriebseinheit wenigstens zwei Anschlüsse aufweisen, um einen Strom durch die Antriebseinheit, insbesondere durch eine Wicklung bspw. eines Ankers bzw. Rotors, zu leiten. In Abhängigkeit von der Stromrichtung kann dabei die Drehrichtung der Antriebseinheit und damit z. B. die Richtung der Bewegung des Sperrelements gesteuert werden. Um die Stromrichtung zu verändern, können (zumindest) vier Schalteinheiten der Antriebseinheit genutzt werden, welche den Strom durch die Antriebseinheit schalten. Auch ermöglichen diese Schalteinheiten es, die Antriebseinheit von der Kontrollanordnung zu trennen und/oder einen Kurzschluss der Anschlüsse zu bewirken, sodass eine Motorbremse (Kurzschlussbremsung) bereitgestellt werden kann. Bevorzugt ist die Kontrollanordnung dadurch zur Initiierung der Bremsung der Antriebseinheit ausgeführt, dass die Kontrollanordnung über Steuerleitungen mit den Schalteinheiten verschaltet ist und zur Ansteuerung dieser Schalteinheiten Steuersignale über diese Steuerleitungen ausgeben kann. Auf diese Weise kann durch die Kontrollanordnung auch die Ansteuerung der Antriebseinheit so erfolgen, dass der Sicherheitsmechanismus angetrieben wird. Dies kann z. B. durch das Bewegen des Sperrelements erfolgen. Es ist möglich, dass die Kontrollanordnung nur mittelbar die Schalteinheiten ansteuert, z. B. über eine Antriebskontrolleinheit (wie einen Motor-Treiber oder dergleichen). Somit findet im Normalbetrieb das unmittelbare Schalten der Schalteinheiten durch die Antriebskontrolleinheit statt, und z. B. nicht direkt durch die Kontrolleinheit und/oder nicht direkt (oder überhaupt nicht) durch die Notbremsanordnung. Dagegen kann die Notbremsanordnung z. B. so mit wenigstens (oder genau) einer oder wenigstens (oder genau) zwei der Schalteinheiten verschaltet sein, dass diese Schalteinheiten unmittelbar durch die Notbremsanordnung geschaltet werden. In anderen Worten kann die Notbremsanordnung die Antriebskontrolleinheit und ggf. auch die Kontrollanordnung überbrücken.

Erfindungsgemäß ist vorgesehen, dass die Notbremsanordnung mit wenigstens zwei elektronischen Schalteinheiten der Antriebseinheit verschaltet ist, um die Schalteinheiten zur Initiierung eines Kurzschlusses bei der Antriebseinheit anzusteuern und insbesondere somit die Bremsung als Kurzschlussbremsung zu initiieren. Es kann ferner vorgesehen sei, dass die Notbremsanordnung mit genau zwei elektronischen Schalteinheiten der Antriebseinheit verschaltet ist, um die Schalteinheiten zur Initiierung eines Kurzschlusses bei der Antriebseinheit anzusteuern und insbesondere somit die Bremsung als Kurzschlussbremsung zu initiieren. Die Notbremsanordnung kann z. B. als integrierter Schaltkreis oder dergleichen ausgebildet sein. Alternativ oder zusätzlich kann die Notbremsanordnung über wenigstens ein oder zwei Ausgänge ein Steuersignal über diese Ausgänge ausgeben. Die Steuersignale sind bspw. mit einem Steuereingang der Schalteinheiten (wie ein Gate-Anschluss oder Basis-Anschluss) verbunden, um daran ein Steuerungspotential und/oder eine Steuerungsspannung (wie eine Basis-Emitter-Spannung oder eine Gate-Source-Spannung) zu bewirken. Damit kann das jeweilige Steuersignal zur Umschaltung derjenigen Schalteinheit führen, an welcher es ausgegeben wird. Zum Bewirken eines Drehmoments der Antriebseinheit können dabei diese beiden Schalteinheiten ausschließlich abwechselnd geschlossen werden, sodass nur ein wechselseitiges Einschalten der Schalteinheiten möglich ist. Auf diese Weise wird zusammen mit weiteren Schalteinheiten die Stromrichtung in einem Schaltkreis (z. B. durch wenigstens eine Wicklung) durch die Antriebseinheit kontrolliert, und damit die Drehrichtung vorgegeben. Zum Abbremsen der Antriebseinheit kann hingegen dieser Schaltkreis kurzgeschlossen werden, um auf diese Weise eine Last bei der Antriebseinheit zu erhöhen. Dies führt zuverlässig zu einer Kurzschlussbremsung, welche auch als Notbremsung durch die Notbremsanordnung genutzt werden kann.

Vorzugsweise kann vorgesehen sein, dass ein Signaleingang, insbesondere ein negierter Signaleingang, der Notbremsanordnung mit einem Signalausgang der Überwachungsanordnung verbunden ist, um vorzugsweise im Fehlerbetrieb durch diesen Signaleingang aktiviert zu werden. Das Aktivieren kann z. B. zur Auslösung eines Notfallmechanismus führen, welcher die Bremsung der Antriebseinheit durch die Notbremsanordnung bewirkt (d. h. eine Notbremsung durchführt). Hierzu kann der Notfallmechanismus vorteilhafterweise einen Kondensator der Notbremsanordnung aufladen und/oder die Ausgabe von Steuersignalen an wenigstens eine oder zwei Schalteinheiten der Antriebseinheit initiieren. Der Signaleingang kann dabei negiert sein, um durch ein "Low-Signal" aktiviert werden zu können. Auf diese Weise kann bei einer Beeinträchtigung der Hauptenergieversorgung (wie einem Spannungsabfall bei der Kontrollanordnung) ein Wegfall der Spannung am Signalausgang den Notfallmechanismus automatisch auslösen, und somit die Notbremsanordnung aktivieren.

Ein weiterer Vorteil im Rahmen der Erfindung ist erzielbar, wenn die Antriebseinheit als Gleichstrommotor vorgesehen ist, und insbesondere zwei Anschlüsse einer Wicklung, vorzugsweise einer Ankerwicklung oder Erregerwicklung, aufweist, welche über eine jeweilige Schalteinheit mit einem gemeinsamen Potential, vorzugsweise Massepotential, verbunden sind, um bevorzugt die Schalteinheiten zur Bewirkung eines Kurzschlusses bei der Wicklung zur Bremsung durch die Notbremsanordnung zu schließen. Hierzu können die Schalteinheiten auch in die Antriebseinheit integriert sein, und somit mit den weiteren Komponenten des Gleichstrommotors ein gemeinsames Bauteil bilden. Die Antriebseinheit kann durch die Bremsung gestoppt werden, z. B. innerhalb von maximal einer Sekunde. Dies führt zu einer zuverlässigen Notbremsung der Bewegung, welche durch die Antriebseinheit angetrieben wird (z. B. eines Sperrelements). Auf diese Weise können Probleme oder Schäden vermieden werden, welche sich durch eine ungebremste Bewegung ergeben würden.

In einer weiteren Möglichkeit kann vorgesehen sein, dass die Anordnung zur Bereitstellung der Notbremsfunktion bei der Sicherheitsvorrichtung in der Form einer Lenksäulenverriegelung ausgeführt ist, d. h., dass die Sicherheitsvorrichtung als eine Lenksäulenverriegelung ausgebildet ist. Dabei kann die Kontrollanordnung über die Ansteuerung der Antriebseinheit dazu ausgebildet sein, eine Bewegung eines Sperrelements der Sicherheitsvorrichtung von einer Entriegelungsposition in eine Verriegelungsposition und/oder umgekehrt zu initiieren, und vorzugsweise die Bremsung als Kurzschlussbremsung der Antriebseinheit zum vollständigen Stoppen dieser Bewegung zu initiieren. Die Kurzschlussbremsung (oder auch Motorbremsung) hat den Vorteil, dass auf diese Weise ein Nachlaufen der Antriebseinheit (insbesondere des Motors) verhindert werden kann. Somit kann ggf. auch eine Bewegung des Sperrelements über eine maximale Entriegelungs- oder Verriegelungsposition hinaus verhindert werden.

Zudem ist im Rahmen der Erfindung denkbar, dass die Notbremsanordnung eine Energiereserve bereitstellt, vorzugsweise durch einen Kondensator und/oder durch einen, insbesondere elektrischen und/oder mechanischen, Notenergiespeicher. Auf diese Weise kann im Fehlerfall, insbesondere bei einer fehlerhaften Hauptenergieversorgung und/oder bei einem Spannungsabfall bei der Kontrollanordnung, die Bremsung und insbesondere das Schalten eines Kurzschlusses bei der Antriebseinheit bereitgestellt werden. Um als mechanischer Notenergiespeicher ausgeführt zu sein, ist z. B. die Ausbildung des Notenergiespeichers als Relais oder dergleichen denkbar.

Ferner kann im Rahmen der Erfindung vorgesehen sein, dass die Kontrollanordnung mit wenigstens oder genau vier Schalteinheiten, insbesondere MOSFETs (Metall-Oxid-Halbleiter-Feldeffekttransistoren), der Antriebseinheit (insbesondere elektrisch) verbunden ist, um die Schalteinheiten zur Einstellung einer Drehrichtung der Antriebseinheit anzusteuern. Dabei kann die Notbremsanordnung mit wenigstens oder genau zwei der Schalteinheiten (insbesondere elektrisch) verbunden sein, um diese zur Initiierung der Bremsung anzusteuern. Es ist möglich, dass die (elektrische) Verbindung der Notbremsanordnung mit den Schalteinheiten zusätzlich zu (und ggf. unabhängig von) der Verbindung der Kontrollanordnung mit diesen Schalteinheiten vorgesehen ist. Auch kann die Verbindung der Notbremsanordnung anders als die Verbindung der Kontrollanordnung mit diesen Schalteinheiten als unmittelbare Verbindung ausgeführt sein. Dies ermöglicht eine zuverlässige Ansteuerung auch im Fehlerfall.

Zudem ist im Rahmen der Erfindung denkbar, dass eine Vorrangsanordnung mit der Kontrollanordnung und/oder mit der Notbremsanordnung verschaltet ist, um insbesondere ein Ansteuern von wenigstens einer der Schalteinheiten der Antriebseinheit durch die Notbremsanordnung vorrangig zur Kontrollanordnung bereitzustellen und/oder das Ansteuern wenigstens einer der Schalteinheiten durch die Kontrollanordnung im Fehlerbetrieb zu verhindern. So kann vorteilhafterweise über einen (weiteren) Ausgang der Notbremsanordnung, welcher mit der Vorrangsanordnung verbunden ist, die Vorrangsanordnung im Fehlerbetrieb aktiviert werden und hierdurch (nur im Fehlerbetrieb) die Ansteuerung der Antriebseinheit durch die Kontrollanordnung, insbesondere Kontrolleinheit unterbunden werden. Alternativ oder zusätzlich kann die Vorrangsanordnung dazu ausgeführt sein, im Fehlerbetrieb die Kontrollanordnung und/oder die Antriebskontrolleinheit von der Antriebseinheit zu entkoppeln. Insbesondere können durch die Vorrangsanordnung die wenigstens ein oder zwei Schalteinheiten (z. B. erste und zweite Schalteinheit) der Antriebseinheit geöffnet werden, welche nicht mit der Notbremsanordnung verbunden sind. Bei gleichzeitigem Schließen der wenigstens ein oder zwei Schalteinheiten (z. B. dritte und vierte Schalteinheit) der Antriebseinheit, welche mit der Notbremsanordnung verbunden sind, ergibt dies eine zuverlässige Kurzschlussbremsung.

Des Weiteren ist es im Rahmen der Erfindung optional möglich, dass die Überwachungsanordnung zumindest eine der nachfolgenden Überwachungseinheiten aufweist:
- einen Watchdog zur Überwachung wenigstens einer Kontrolleinheit der Kontrollanordnung, vorzugsweise eines Mikrocontrollers,
- eine Energie-, und vorzugsweise Spannungs-Überwachungseinheit zur Überwachung einer Hauptenergieversorgung der Kontrollanordnung,
wobei vorzugsweise die Überwachungsanordnung dazu ausgeführt ist, bei einem durch bereits eine der Überwachungseinheiten detektierten Fehlerfall in den Fehlerbetrieb zu wechseln und/oder die Notbremsanordnung zu aktivieren. In anderen Worten kann es ausreichen, dass eine der Überwachungseinheiten einen kritischen Zustand meldet, um in den Fehlerbetrieb zu wechseln. Dies gewährleistet eine schnelle Reaktion auf einen Fehlerfall.

Eine Hauptenergieversorgung kann insbesondere eine elektrische Energieversorgung betreffen, welche zum Betrieb der Kontrollanordnung und/oder der Antriebskontrolleinheit notwendig ist und/oder zur Initiierung einer Bremsung der (und/oder durch die) Antriebseinheit durch die Kontrollanordnung erforderlich ist. Dabei kann die Hauptenergieversorgung z. B. durch ein Steuergerät des Fahrzeuges und/oder durch ein Bordnetz des Fahrzeuges geliefert werden. Es kann sich dabei um die einzige (primäre) Energieversorgung für die erfindungsgemäße Anordnung handeln, welche von einer Fahrzeugbatterie für die Anordnung bereitgestellt wird. Eine weitere Energieversorgung kann z. B. eine Notenergieversorgung durch einen Notenergiespeicher sein, welcher allerdings durch die Anordnung selbst nur sekundär in Abhängigkeit von der Hauptenergieversorgung bereitgestellt wird.

Es kann im Rahmen der Erfindung vorgesehen sein, dass die Überwachungsanordnung dazu ausgeführt ist, zum Aktivieren der Notbremsanordnung für die Bremsung ein Signal an einem Signalausgang, insbesondere Reset-Ausgang, der Kontrollanordnung zu verändern, wobei vorzugsweise der Signalausgang mit einem Signaleingang der Notbremsanordnung verbunden ist, um bevorzugt eine Aufladung eines Kondensators (oder ein Aktivieren einer anderen Energiereserve) der Notbremsanordnung zu initiieren. Dabei kann der Kondensator über eine Diode mit einer Hauptenergieversorgung verbunden sein, um durch die vom Kondensator bereitgestellte elektrische Energie wenigstens eine Schalteinheit zum Schalten eines Kurzschlusses der Antriebseinheit anzusteuern.

Es kann ferner möglich sein, dass ein Notenergiespeicher mit der Notbremsanordnung verbunden ist, um für das Initiieren der Bremsung, insbesondere zum Aufladen eines Kondensators der Notbremsanordnung, eine (sekundäre) Energieversorgung zusätzlich zur (primären) Hauptenergieversorgung der Anordnung bereitzustellen. Dies dient insbesondere dazu, die für die Notbremsung notwendige Energie bereitzustellen, falls die nach einem Spannungsabfall vorhandene Spannung der Hauptenergieversorgung nicht ausreicht, um den Kondensator der Notbremsanordnung (als einen Bremskondensator) zu laden.

Es ist ferner denkbar, dass wenigstens ein Sensor der Sicherheitsvorrichtung vorgesehen ist, um eine Position eines Sperrelements, insbesondere zum Verriegeln einer Lenksäule, zu erfassen. Der Sensor kann mit der Kontrollanordnung verschaltet sein, um anhand der erfassten Position die Bremsung im Normalbetrieb zu initiieren. Auch kann die Notbremsanordnung dazu ausgeführt sein, die Bremsung unabhängig von der erfassten Position und/oder dem Sensor zu initiieren. Der Sensor ist bspw. als ein Hallsensor oder optoelektronischer Sensor wie als Lichtschranke oder dergleichen ausgebildet, um die Position des Sperrelements zu erfassen. So kann bspw. zuverlässig erfasst werden, wenn sich das Sperrelement in einer Verriegelungsposition befindet, in welcher ein Abbremsen und Stoppen des Sperrelements erfolgen muss.

Ebenfalls Gegenstand der Erfindung ist ein Verfahren zur Bereitstellung einer Notbremsfunktion bei einer Sicherheitsvorrichtung eines Fahrzeuges.

Vorteilhafterweise kann bei einem erfindungsgemäßen Verfahren zumindest einer der nachfolgenden Schritte durchgeführt werden, wobei die Schritte bevorzugt nacheinander in der angegebenen Reihenfolge oder in beliebiger Reihenfolge durchgeführt werden, und ggf. auch einzelne Schritte wiederholt werden können:
- Durchführen einer Ansteuerung einer Antriebseinheit zum Antreiben eines Sicherheitsmechanismus der Sicherheitsvorrichtung in einem Normalbetrieb, wobei die Ansteuerung auch eine Initiierung einer Bremsung der (und/oder durch die) Antriebseinheit im Normalbetrieb umfassen kann,
- Durchführen einer Überwachung dieser Ansteuerung,
- Umschalten von dem Normalbetrieb in einen Fehlerbetrieb in Abhängigkeit von der Überwachung, insbesondere wenn ein Fehlerfall (ein Defekt oder kritischer Zustand oder dergleichen) detektiert wird,
- Aktivieren einer Notbremsanordnung - insbesondere nur - im Fehlerbetrieb, wodurch die Bremsung der (und/oder durch die) Antriebseinheit als Notbremsung initiiert wird,

wobei die Notbremsanordnung mit wenigstens zwei elektronischen Schalteinheiten der Antriebseinheit verschaltet ist, um die Schalteinheiten zur Initiierung eines Kurzschlusses bei der Antriebseinheit anzusteuern und somit die Bremsung als Kurzschlussbremsung zu initiieren.

Damit bringt das erfindungsgemäße Verfahren die gleichen Vorteile mit sich, wie sie ausführlich mit Bezug auf eine erfindungsgemäße Anordnung beschrieben worden sind.

Weiter ist im Rahmen der Erfindung denkbar, dass der Fehlerbetrieb dafür spezifisch ist, dass die Initiierung der Bremsung im Normalbetrieb beeinträchtigt ist, insbesondere durch eine Beeinträchtigung einer Hauptenergieversorgung für die Ansteuerung, wobei vorzugsweise zur Detektion dieser Beeinträchtigung die Überwachung als eine Spannungsüberwachung der Hauptenergieversorgung durchgeführt wird. Hierzu kann bspw. ein Spannungsregler der Kontrollanordnung überwacht werden. Dieser Spannungsregler regelt z. B. eine Eingangsspannung vom Fahrzeugbordnetz, um eine (möglichst konstante) Spannung insbesondere Gleichspannung als Hauptenergieversorgung bereitzustellen.

Weitere Vorteile, Merkmale und Einzelheiten der Erfindung ergeben sich aus der nachfolgenden Beschreibung, in der unter Bezugnahme auf die Zeichnung Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:

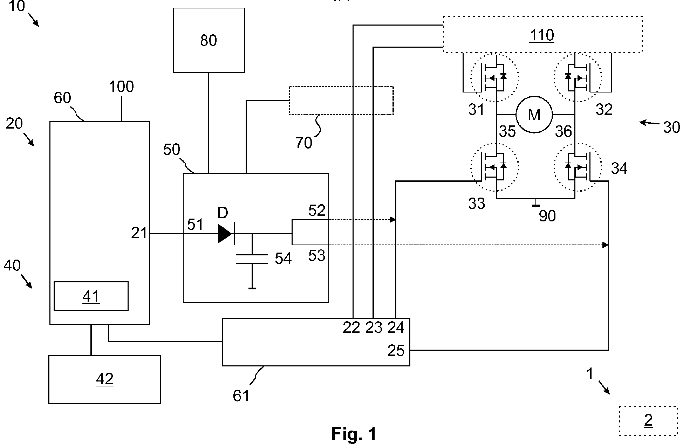

Fig. 1 eine schematische Darstellung einer erfindungsgemäßen Anordnung, insbesondere zur Visualisierung eines erfindungsgemäßen Verfahrens.

In der nachfolgenden Figur werden für die gleichen technischen Merkmale auch von unterschiedlichen Ausführungsbeispielen die identischen Bezugszeichen verwendet.

In Fig. 1 gezeigt ist eine erfindungsgemäße Anordnung 10 zur Bereitstellung einer Notbremsfunktion bei einer Sicherheitsvorrichtung 1 eines Fahrzeuges. Die Sicherheitsvorrichtung 1 ist bspw. als eine Lenksäulenverriegelung ausgebildet, wobei die Lenksäule des Fahrzeuges durch ein nicht gezeigtes Sperrelement verriegelt werden kann. Dabei ist es möglich, dass optional wenigstens ein Sensor 2 der Sicherheitsvorrichtung 1 vorgesehen ist, um eine Position des Sperrelements, insbesondere eine Position zum Verriegeln der Lenksäule, zu erfassen Die erfindungsgemäße Anordnung 10 weist eine elektronische Kontrollanordnung 20 zur Ansteuerung einer Antriebseinheit 30 auf, um über die Antriebseinheit 30 in einem Normalbetrieb einen Sicherheitsmechanismus der Sicherheitsvorrichtung 1 anzutreiben. Der Sicherheitsmechanismus bewirkt dabei z. B. das Bewegen des Sperrelements und/oder das Sperren der Lenksäule. Dabei kann die Kontrollanordnung 20 zur Initiierung einer Bremsung, insbesondere eines Stoppens, der Antriebseinheit 30 ausgeführt sein. Die Bremsung wird vorteilhafterweise dann eingeleitet, wenn der Sensor 2 das Erreichen der Position zum Verriegeln angibt. Die Kontrollanordnung 20 kann eine oder mehrere Kontrolleinheiten 60, 61 (z. B. jeweils Mikrocontroller) aufweisen, um die Ansteuerung bereitzustellen.

Ferner kann bei einer erfindungsgemäßen Anordnung 10 eine elektronische Überwachungsanordnung 40 zur Überwachung der Kontrollanordnung 20 genutzt werden, um in Abhängigkeit von der Überwachung von dem Normalbetrieb in einen Fehlerbetrieb umzuschalten. Dies ermöglicht es, eine Notbremsanordnung 50 zur Initiierung einer Bremsung der Antriebseinheit 30 im Fehlerbetrieb zu aktivieren. Dabei kann die Überwachungsanordnung 40 mit der Notbremsanordnung 50 verschaltet sein und somit dazu ausgeführt sein, beim oder nach dem Umschalten in den Fehlerbetrieb diese Aktivierung durchzuführen.

Die Kontrollanordnung 20 ist im gezeigten Ausführungsbeispiel mit wenigstens vier Schalteinheiten 31, 32, 33, 34, insbesondere MOSFETs, der Antriebseinheit 30 verbunden, um die Schalteinheiten 31, 32, 33, 34 zur Einstellung einer Drehrichtung der Antriebseinheit 30 anzusteuern. Die Verbindung zur den jeweiligen Schalteinheiten 31, 32, 33, 34 erfolgt dabei über jeweilige Steuerausgänge 22, 23, 24, 25 der Kontrollanordnung 20, wobei die Steuerung auch indirekt (mittelbar) über eine Antriebskontrolleinheit 110 stattfinden kann.

Vorteilhafterweise ist die Antriebseinheit 30 als ein Gleichstrommotor ausgebildet, und weist insbesondere zwei Anschlüsse 35, 36 einer Wicklung, vorzugsweise einer Ankerwicklung oder Erregerwicklung, auf. Wie in Figur 1 gezeigt ist, sind die Anschlüsse 35, 36 über eine jeweilige Schalteinheit 33, 34 mit einem gemeinsamen Potential 90, vorzugsweise Massepotential 90, verbunden, um die Schalteinheiten 33, 34 zur Bewirkung eines Kurzschlusses bei der Wicklung zur Bremsung durch die Notbremsanordnung 50 zu schließen. Dabei kann die Notbremsanordnung 50 mit wenigstens zwei 33, 34 der Schalteinheiten 31, 32, 33, 34 der Antriebseinheit 30 verbunden sein, um diese zur Initiierung der Bremsung anzusteuern. Konkret können die Schalteinheiten 33, 34 zur Initiierung des Kurzschlusses bei der Antriebseinheit 30 angesteuert werden und somit die Bremsung als Kurzschlussbremsung initiieren. Die Verbindung der Notbremsanordnung 50 mit den wenigstens zwei 33, 34 der Schalteinheiten 31, 32, 33, 34 erfolgt bspw. als Überbrückung der Kontrollanordnung 20 über jeweilige Notsteuerausgänge 52, 53 direkt auf den jeweiligen Steuerpfad der Schalteinheiten 33, 34. Dies ist in Figur 1 durch einen Pfeil dargestellt.

Ferner kann ein Signaleingang 51, insbesondere ein negierter Signaleingang 51, der Notbremsanordnung 50 mit einem Signalausgang 21 der Überwachungsanordnung 40 verbunden sein, um im Fehlerbetrieb durch diesen Signaleingang 51 aktiviert zu werden.

Die Notbremsanordnung 50 kann ferner eine Energiereserve bereitstellen, vorzugsweise durch einen Kondensator 54 und/oder durch einen, insbesondere elektrischen und/oder mechanischen, Notenergiespeicher 80, um im Fehlerfall, insbesondere bei einer fehlerhaften Hauptenergieversorgung 100 und/oder bei einem Spannungsabfall bei der Kontrollanordnung 20, die Bremsung und insbesondere das Schalten eines Kurzschlusses bei der Antriebseinheit 30 bereitzustellen. Der Notenergiespeicher 80 ist bspw. als ein Akkumulator oder dergleichen ausgebildet, welche im Normalbetrieb durch die Hauptenergieversorgung 100 aufgeladen wird.

Außerdem kann eine Vorrangsanordnung 70 mit der Kontrollanordnung 20 und/oder mit der Notbremsanordnung 50 verschaltet sein, um ein Ansteuern wenigstens einer der Schalteinheiten 33, 34 der Antriebseinheit 30 durch die Notbremsanordnung 50 vorrangig zur Kontrollanordnung 20 bereitzustellen und/oder eine Ansteuerung wenigstens einer der Schalteinheiten 31, 32 durch die Kontrollanordnung 20 zu verhindern.

Es ist vorgesehen, dass die Überwachungsanordnung 40 zumindest eine der nachfolgenden Überwachungseinheiten 41, 42 aufweist:
- einen Watchdog 41 zur Überwachung wenigstens einer Kontrolleinheit 60 der Kontrollanordnung 20, vorzugsweise eines Mikrocontrollers 60,
- eine Energie-, und vorzugsweise Spannungs-Überwachungseinheit 42 zur Überwachung einer Hauptenergieversorgung 100 der Kontrollanordnung 20,
wobei die Überwachungsanordnung 40 dazu ausgeführt ist, bei einem durch bereits eine der Überwachungseinheiten 41, 42 detektierten Fehlerfall in den Fehlerbetrieb zu wechseln und/oder die Notbremsanordnung 50 zu aktivieren. Es ist wie im dargestellten Ausführungsbeispiel auch möglich, dass der Watchdog 41 in der Kontrolleinheit 60 integriert ist.

Die Überwachungsanordnung 40 ist gemäß dem Ausführungsbeispiel dazu ausgeführt, zum Aktivieren der Notbremsanordnung 50 für die Bremsung ein Signal an einem Signalausgang 21, insbesondere Reset-Ausgang, der Kontrollanordnung 20 zu verändern, wobei der Signalausgang 21 mit einem Signaleingang 51 der Notbremsanordnung 50 verbunden ist, um eine Aufladung eines Kondensators 54 der Notbremsanordnung 50 zu initiieren. Der Kondensator 54 kann über eine Diode D mit einer Hauptenergieversorgung 100 verbunden sein, um durch die vom Kondensator 54 bereitgestellte elektrische Energie wenigstens eine Schalteinheit 33, 34 zum Schalten eines Kurzschlusses der Antriebseinheit 30 anzusteuern. Das gezeigte Ausführungsbeispiel visualisiert dabei auch ein erfindungsgemäßes Verfahren, bei welchem gemäß einem ersten Verfahrensschritt ein Durchführen einer Ansteuerung einer Antriebseinheit 30 zum Antreiben eines Sicherheitsmechanismus der Sicherheitsvorrichtung 1 in einem Normalbetrieb erfolgt, wobei die Ansteuerung auch eine Initiierung einer Bremsung der Antriebseinheit 30 im Normalbetrieb umfasst. Anschließend wird gemäß einem zweiten Verfahrensschritt eine Überwachung der Ansteuerung durchgeführt, gemäß einem dritten Verfahrensschritt ein Umschalten von dem Normalbetrieb in einen Fehlerbetrieb in Abhängigkeit von der Überwachung durchgeführt und gemäß einem vierten Verfahrensschritt erfolgt ein Aktivieren einer Notbremsanordnung 50 nur im Fehlerbetrieb, wodurch die Bremsung der Antriebseinheit 30 als Notbremsung initiiert wird. Die voranstehende Erläuterung der Ausführungsformen beschreibt die vorliegende Erfindung ausschließlich im Rahmen von Beispielen.

### Bezugszeichenliste

- 1: Sicherheitsvorrichtung
- 2: Sensor

- 10: Anordnung, Schaltungsanordnung

- 20: Kontrollanordnung
- 21: Signalausgang
- 22: erster Steuerausgang
- 23: zweiter Steuerausgang
- 24: dritter Steuerausgang
- 25: vierter Steuerausgang

- 30: Antriebseinheit
- 31: erste Schalteinheit
- 32: zweite Schalteinheit
- 33: dritte Schalteinheit
- 34: vierte Schalteinheit
- 35: erster Anschluss
- 36: zweiter Anschluss

- 40: Überwachungsanordnung
- 41: erste Überwachungseinheit, Watchdog
- 42: zweite Überwachungseinheit

- 50: Notbremsanordnung
- 51: Signaleingang
- 52: erster Notsteuerausgang
- 53: zweiter Notsteuerausgang
- 54: Kondensator
- 60: Kontrolleinheit
- 61: weitere Kontrolleinheit

- 70: Vorrangsanordnung

- 80: Notenergiespeicher

- 90: Massepotential, gemeinsames Potential

- 100: Hauptenergieversorgung
- 110: Antriebskontrolleinheit

- D: Diode

## Patentansprüche

1. Anordnung (10) zur Bereitstellung einer Notbremsfunktion bei einer Sicherheitsvorrichtung (1) in der Form einer Lenksäulenverriegelung eines Fahrzeuges, aufweisend:
- eine elektronische Kontrollanordnung (20) zur Ansteuerung einer Antriebseinheit (30), um in einem Normalbetrieb einen Sicherheitsmechanismus der Sicherheitsvorrichtung (1) anzutreiben, wobei die Kontrollanordnung (20) zur Initiierung einer Bremsung der Antriebseinheit (30) ausgeführt ist,
- eine elektronische Überwachungsanordnung (40) zur Überwachung der Kontrollanordnung (20), um in Abhängigkeit von der Überwachung von dem Normalbetrieb in einen Fehlerbetrieb umzuschalten,
- eine Notbremsanordnung (50), um die Bremsung der Antriebseinheit (30) im Fehlerbetrieb zu initiieren,
wobei die Überwachungsanordnung (40) mit der Notbremsanordnung (50) verschaltet ist, um im Fehlerbetrieb die Notbremsanordnung (50) für die Bremsung zu aktivieren, wobei die Notbremsanordnung (50) mit wenigstens zwei elektronischen Schalteinheiten (33, 34) der Antriebseinheit (30) verschaltet ist, um die Schalteinheiten (33, 34) zur Initiierung eines Kurzschlusses bei der Antriebseinheit (30) anzusteuern und somit die Bremsung als Kurzschlussbremsung zu initiieren.

2. Anordnung (10) nach Anspruch 1,
**dadurch gekennzeichnet,**
**dass** ein Signaleingang (51), insbesondere ein negierter Signaleingang (51), der Notbremsanordnung (50) mit einem Signalausgang (21) der Überwachungsanordnung (40) verbunden ist, um im Fehlerbetrieb durch diesen Signaleingang (51) aktiviert zu werden.

3. Anordnung (10) nach Anspruch 1 oder 2,
**dadurch gekennzeichnet,**
**dass** die Antriebseinheit (30) als Gleichstrommotor vorgesehen ist, und insbesondere zwei Anschlüsse (35, 36) einer Wicklung, vorzugsweise einer Ankerwicklung oder Erregerwicklung, aufweist, welche über eine jeweilige Schalteinheit (33, 34) mit einem gemeinsamen Potential (90), vorzugsweise Massepotential (90), verbunden sind, um die Schalteinheiten (33, 34) zur Bewirkung eines Kurzschlusses bei der Wicklung zur Bremsung durch die Notbremsanordnung (50) zu schließen.

4. Anordnung (10) nach einem der vorhergehenden Ansprüche,
**dadurch gekennzeichnet,**
**dass** die Anordnung (10) dazu ausgeführt ist, die Notbremsfunktion bei der Sicherheitsvorrichtung (1) in der Form einer Lenksäulenverriegelung bereitzustellen, und die Kontrollanordnung (20) über die Ansteuerung der Antriebseinheit (30) dazu ausgebildet ist, eine Bewegung eines Sperrelements der Sicherheitsvorrichtung (1) von einer Entriegelungsposition in eine Verriegelungsposition und/oder umgekehrt zu initiieren, und die Bremsung als Kurzschlussbremsung der Antriebseinheit (30) zum vollständigen Stoppen dieser Bewegung zu initiieren.

5. Anordnung (10) nach einem der vorhergehenden Ansprüche,
**dadurch gekennzeichnet,**
**dass** die Notbremsanordnung (50) eine Energiereserve bereitstellt, vorzugsweise durch einen Kondensator (54) und/oder durch einen, insbesondere elektrischen und/oder mechanischen, Notenergiespeicher (80), um im Fehlerfall, insbesondere bei einer fehlerhaften Hauptenergieversorgung (100) und/oder bei einem Spannungsabfall bei der Kontrollanordnung (20), die Bremsung und insbesondere das Schalten eines Kurzschlusses bei der Antriebseinheit (30) bereitzustellen.

6. Anordnung (10) nach einem der vorhergehenden Ansprüche,
**dadurch gekennzeichnet,**
**dass** die Kontrollanordnung (20) mit wenigstens vier Schalteinheiten (31, 32, 33, 34), insbesondere MOSFETs, der Antriebseinheit (30) verbunden ist, um die Schalteinheiten (31, 32, 33, 34) zur Einstellung einer Drehrichtung der Antriebseinheit (30) anzusteuern, wobei die Notbremsanordnung (50) mit wenigstens zwei (33, 34) der Schalteinheiten (31, 32, 33, 34) verbunden ist, um diese zur Initiierung der Bremsung anzusteuern.

7. Anordnung (10) nach einem der vorhergehenden Ansprüche,
**dadurch gekennzeichnet,**
**dass** eine Vorrangsanordnung (70) mit der Kontrollanordnung (20) und/oder mit der Notbremsanordnung (50) verschaltet ist, um ein Ansteuern von Schalteinheiten (31, 32, 33, 34) der Antriebseinheit (30) durch die Notbremsanordnung (50) vorrangig zur Kontrollanordnung (20) bereitzustellen und/oder das Ansteuern der Schalteinheiten (31, 32, 33, 34) durch die Kontrollanordnung (20) im Fehlerbetrieb zu verhindern.

8. Anordnung (10) nach einem der vorhergehenden Ansprüche,
**dadurch gekennzeichnet,**
**dass** die Überwachungsanordnung (40) zumindest eine der nachfolgenden Überwachungseinheiten (41, 42) aufweist:
- einen Watchdog (41) zur Überwachung wenigstens einer Kontrolleinheit (60) der Kontrollanordnung (20), vorzugsweise eines Mikrocontrollers (60),
- eine Energie- und vorzugsweise Spannungs-Überwachungseinheit (42) zur Überwachung einer Hauptenergieversorgung (100) der Kontrollanordnung (20),
wobei die Überwachungsanordnung (40) dazu ausgeführt ist, bei einem durch bereits eine der Überwachungseinheiten (41, 42) detektierten Fehlerfall in den Fehlerbetrieb zu wechseln und/oder die Notbremsanordnung (50) zu aktivieren.

9. Anordnung (10) nach einem der vorhergehenden Ansprüche,
**dadurch gekennzeichnet,**
**dass** die Überwachungsanordnung (40) dazu ausgeführt ist, zum Aktivieren der Notbremsanordnung (50) für die Bremsung ein Signal an einem Signalausgang (21), insbesondere Reset-Ausgang, der Kontrollanordnung (20) zu verändern, wobei der Signalausgang (21) mit einem Signaleingang (51) der Notbremsanordnung (50) verbunden ist, um eine Aufladung eines Kondensators (54) der Notbremsanordnung (50) zu initiieren, welcher insbesondere über eine Diode (D) mit einer Hauptenergieversorgung (100) verbunden ist, um durch die vom Kondensator (54) bereitgestellte elektrische Energie wenigstens eine Schalteinheit (33, 34) zum Schalten eines Kurzschlusses der Antriebseinheit (30) anzusteuern.

10. Anordnung (10) nach einem der vorhergehenden Ansprüche,
**dadurch gekennzeichnet,**
**dass** ein Notenergiespeicher (80) mit der Notbremsanordnung (50) verbunden ist, um für das Initiieren der Bremsung, insbesondere zum Aufladen eines Kondensators (54) der Notbremsanordnung (50), eine Energieversorgung zusätzlich zur Hauptenergieversorgung (100) der Anordnung (10) bereitzustellen.

11. Anordnung (10) nach einem der vorhergehenden Ansprüche,
**dadurch gekennzeichnet,**
**dass** wenigstens ein Sensor (2) der Sicherheitsvorrichtung (1) vorgesehen ist, um eine Position eines Sperrelements, insbesondere zum Verriegeln einer Lenksäule, zu erfassen, und mit der Kontrollanordnung (20) verschaltet ist, um anhand der erfassten Position die Bremsung im Normalbetrieb zu initiieren, wobei die Notbremsanordnung (50) dazu ausgeführt ist, die Bremsung unabhängig von der erfassten Position und/oder dem Sensor (2) zu initiieren.

12. Verfahren zur Bereitstellung einer Notbremsfunktion bei einer Sicherheitsvorrichtung (1) in der Form einer Lenksäulenverriegelung eines Fahrzeuges, wobei die nachfolgenden Schritte durchgeführt werden:
- Durchführen einer Ansteuerung einer Antriebseinheit (30) zum Antreiben eines Sicherheitsmechanismus der Sicherheitsvorrichtung (1) in einem Normalbetrieb, wobei die Ansteuerung auch eine Initiierung einer Bremsung der Antriebseinheit (30) im Normalbetrieb umfasst,
- Durchführen einer Überwachung der Ansteuerung,
- Umschalten von dem Normalbetrieb in einen Fehlerbetrieb in Abhängigkeit von der Überwachung,
- Aktivieren einer Notbremsanordnung (50) nur im Fehlerbetrieb, wodurch die Bremsung der Antriebseinheit (30) als Notbremsung initiiert wird.
**dadurch gekennzeichnet, dass**
die Notbremsanordnung (50) mit wenigstens zwei elektronischen Schalteinheiten (33, 34) der Antriebseinheit (30) verschaltet ist, um die Schalteinheiten (33, 34) zur Initiierung eines Kurzschlusses bei der Antriebseinheit (30) anzusteuern und somit die Bremsung als Kurzschlussbremsung zu initiieren.

13. Verfahren nach Anspruch 12,
**dadurch gekennzeichnet,**
**dass** der Fehlerbetrieb dafür spezifisch ist, dass die Initiierung der Bremsung im Normalbetrieb beeinträchtigt ist, insbesondere durch eine Beeinträchtigung einer Hauptenergieversorgung (100) für die Ansteuerung, wobei vorzugsweise zur Detektion dieser Beeinträchtigung die Überwachung als eine Spannungsüberwachung der Hauptenergieversorgung (100) durchgeführt wird.

## Claims

1. An arrangement (10) for providing an emergency braking function in a safety device (1) in the form of a steering column lock of a vehicle, comprising:
- an electronic control arrangement (20) for actuating a drive unit (30) in order to drive a safety mechanism of the safety device (1) in normal operation, wherein the control arrangement (20) is designed to initiate braking of the drive unit (30),
- an electronic monitoring arrangement (40) for monitoring the control arrangement (20) in order to switch from normal operation to fault operation as a function of the monitoring,
- an emergency braking arrangement (50) to initiate braking of the drive unit (30) in fault operation,
wherein the monitoring arrangement (40) is connected to the emergency braking arrangement (50) in order to activate the emergency braking arrangement (50) for braking in fault operation, wherein
the emergency braking arrangement (50) is connected to at least two electronic switching units (33, 34) of the drive unit (30) in order to actuate the switching units (33, 34) to initiate a short-circuit in the drive unit (30) and thus to initiate braking as short-circuit braking.

2. Arrangement (10) according to claim 1,
**characterized in that**
a signal input (51), in particular a negated signal input (51), of the emergency braking arrangement (50) is connected to a signal output (21) of the monitoring arrangement (40) in order to be activated by this signal input (51) in fault operation.

3. Arrangement (10) according to claim 1 or 2,
**characterized in that**
the drive unit (30) is provided as a DC motor, and in particular has two terminals (35, 36) of a winding, preferably an armature winding or exciter winding, which are connected via a respective switching unit (33, 34) to a common potential (90), preferably earth potential (90), in order to close the switching units (33, 34) to effect a short circuit in the winding for braking by the emergency brake arrangement (50).

4. Arrangement (10) according to one of the preceding claims,
**characterized in that**
the arrangement (10) is designed to provide the emergency braking function in the safety device (1) in the form of a steering column lock, and the control arrangement (20) is designed, via the control of the drive unit (30), to initiate a movement of a locking element of the safety device (1) from an unlocking position into a locking position and/or vice versa, and to initiate the braking as short-circuit braking of the drive unit (30) in order to stop this movement completely.

5. Arrangement (10) according to one of the preceding claims,
**characterized in that**
the emergency braking arrangement (50) provides an energy reserve, preferably by means of a capacitor (54) and/or by means of an emergency energy store (80), in particular an electrical and/or mechanical one, in order to provide braking and in particular the switching of a short circuit in the drive unit (30) in the event of a fault, in particular in the event of a faulty main energy supply (100) and/or in the event of a voltage drop in the control arrangement (20).

6. Arrangement (10) according to one of the preceding claims,
**characterized in that**
the control arrangement (20) is connected to at least four switching units (31, 32, 33, 34), in particular MOSFETs, of the drive unit (30) in order to actuate the switching units (31, 32, 33, 34) for setting a direction of rotation of the drive unit (30), the emergency braking arrangement (50) being connected to at least two (33, 34) of the switching units (31, 32, 33, 34) in order to actuate these in order to initiate braking.

7. Arrangement (10) according to one of the preceding claims,
**characterized in that**
a priority arrangement (70) is connected to the control arrangement (20) and/or to the emergency braking arrangement (50) in order to provide actuation of switching units (31, 32, 33, 34) of the drive unit (30) by the emergency braking arrangement (50) with priority over the control arrangement (20) and/or to prevent actuation of the switching units (31, 32, 33, 34) by the control arrangement (20) in fault operation.

8. Arrangement (10) according to one of the preceding claims,
**characterized in that**
the monitoring arrangement (40) has at least one of the following monitoring units (41, 42):
- a watchdog (41) for monitoring at least one control unit (60) of the control arrangement (20), preferably a microcontroller (60),
- a power and preferably voltage monitoring unit (42) for monitoring a main power supply (100) of the control arrangement (20),
wherein the monitoring arrangement (40) is designed to switch to fault operation and/or activate the emergency braking arrangement (50) in the event of a fault already detected by one of the monitoring units (41, 42).

9. Arrangement (10) according to one of the preceding claims,
**characterized in that**
the monitoring arrangement (40) is designed to change a signal at a signal output (21), in particular reset output, of the control arrangement (20) in order to activate the emergency braking arrangement (50) for braking, the signal output (21) being connected to a signal input (51) of the emergency braking arrangement (50), in order to initiate charging of a capacitor (54) of the emergency brake arrangement (50), which is connected in particular via a diode (D) to a main power supply (100) in order to actuate at least one switching unit (33, 34) for switching a short circuit of the drive unit (30) by means of the electrical energy provided by the capacitor (54).

10. Arrangement (10) according to one of the preceding claims,
**characterized in that**
an emergency energy store (80) is connected to the emergency braking arrangement (50) in order to provide an energy supply in addition to the main energy supply (100) of the arrangement (10) for initiating the braking, in particular for charging a capacitor (54) of the emergency braking arrangement (50).

11. Arrangement (10) according to one of the preceding claims,
**characterized in that**
at least one sensor (2) of the safety device (1) is provided in order to detect a position of a locking element, in particular for locking a steering column, and is connected to the control arrangement (20) in order to initiate braking in normal operation on the basis of the detected position, the emergency braking arrangement (50) being designed to initiate braking independently of the detected position and/or the sensor (2).

12. Method for providing an emergency braking function in a safety device (1) in the form of a steering column lock of a vehicle, wherein the following steps are carried out:
- Performing an actuation of a drive unit (30) for driving a safety mechanism of the safety device (1) in a normal operation, wherein the actuation also comprises an initiation of a braking of the drive unit (30) in the normal operation,
- Carry out monitoring of the control,
- Switching from normal operation to fault operation depending on the monitoring,
- Activation of an emergency braking arrangement (50) only in fault operation, whereby the braking of the drive unit (30) is initiated as emergency braking,
**characterized in that**
the emergency braking arrangement (50) is connected to at least two electronic switching units (33, 34) of the drive unit (30) in order to actuate the switching units (33, 34) to initiate a short circuit in the drive unit (30) and thus to initiate braking as short-circuit braking.

13. Method according to claim 12,
**characterized in that**
the fault operation is specific to the fact that the initiation of braking in normal operation is impaired, in particular by an impairment of a main power supply (100) for the actuation, the monitoring preferably being carried out as a voltage monitoring of the main power supply (100) in order to detect this impairment.

## Revendications

1. Dispositif (10) pour fournir une fonction de freinage d'urgence dans un dispositif de sécurité (1) sous la forme d'un verrouillage de colonne de direction d'un véhicule, comprenant :
- un dispositif de contrôle électronique (20) pour commander une unité d'entraînement (30) afin d'entraîner un mécanisme de sécurité du dispositif de sécurité (1) dans un mode normal, le dispositif de contrôle (20) étant réalisé pour initier un freinage de l'unité d'entraînement (30),
- un dispositif de surveillance électronique (40) pour la surveillance du dispositif de contrôle (20), afin de passer du mode normal à un mode de défaut en fonction de la surveillance,
- un dispositif de freinage d'urgence (50) pour initier le freinage de l'unité d'entraînement (30) en mode de défaut,
le dispositif de surveillance (40) étant connecté au dispositif de freinage d'urgence (50) afin d'activer le dispositif de freinage d'urgence (50) pour le freinage en mode de défaut, dans lequel
le dispositif de freinage d'urgence (50) est connecté à au moins deux unités de commutation électroniques (33, 34) de l'unité d'entraînement (30), afin de commander les unités de commutation (33, 34) pour initier un court-circuit dans l'unité d'entraînement (30) et ainsi initier le freinage en tant que freinage par court-circuit.

2. Dispositif (10) selon la revendication 1,
**caractérisé en ce que**
une entrée de signal (51), en particulier une entrée de signal (51) inversée, du dispositif de freinage d'urgence (50) est reliée à une sortie de signal (21) du dispositif de surveillance (40), afin d'être activée par cette entrée de signal (51) en mode de défaut.

3. Dispositif (10) selon la revendication 1 ou 2,
**caractérisé en ce que**
l'unité d'entraînement (30) est prévue comme moteur à courant continu, et présente en particulier deux connexions (35, 36) d'un enroulement, de préférence d'un enroulement d'induit ou d'un enroulement d'excitation, qui sont reliées par une unité de commutation respective (33, 34) à un potentiel commun (90), de préférence un potentiel de masse (90), afin de fermer les unités de commutation (33, 34) pour provoquer un court-circuit dans l'enroulement pour le freinage par le dispositif de freinage d'urgence (50).

4. Dispositif (10) selon l'une quelconque des revendications précédentes,
**caractérisé en ce que**
le dispositif (10) est conçu pour fournir la fonction de freinage d'urgence dans le dispositif de sécurité (1) sous la forme d'un verrouillage de colonne de direction, et Le dispositif de contrôle (20) est conçu, par l'intermédiaire de la commande de l'unité d'entraînement (30), pour initier un mouvement d'un élément de blocage du dispositif de sécurité (1) d'une position de déverrouillage à une position de verrouillage et/ou inversement, et pour initier le freinage sous la forme d'un freinage en court-circuit de l'unité d'entraînement (30) pour arrêter complètement ce mouvement.

5. Dispositif (10) selon l'une quelconque des revendications précédentes,
**caractérisé en ce que**
le dispositif de freinage d'urgence (50) met à disposition une réserve d'énergie, de préférence par un condensateur (54) et/ou par un accumulateur d'énergie de secours (80), en particulier électrique et/ou mécanique, afin de mettre à disposition le freinage et en particulier la commutation d'un court-circuit dans l'unité d'entraînement (30) en mode de défaut, en particulier en cas d'alimentation en énergie principale (100) défectueuse et/ou en cas de chute de tension dans le dispositif de contrôle (20).

6. Dispositif (10) selon l'une quelconque des revendications précédentes,
**caractérisé en ce que**
le dispositif de contrôle (20) est relié à au moins quatre unités de commutation (31, 32, 33, 34), en particulier des MOSFET, de l'unité d'entraînement (30), afin de commander les unités de commutation (31, 32, 33, 34) pour le réglage d'un sens de rotation de l'unité d'entraînement (30), le dispositif de freinage d'urgence (50) étant relié à au moins deux (33, 34) des unités de commutation (31, 32, 33, 34), afin de commander celles-ci pour le déclenchement du freinage.

7. Dispositif (10) selon l'une quelconque des revendications précédentes,
**caractérisé en ce qu'**
un dispositif prioritaire (70) est connecté au dispositif de contrôle (20) et/ou au dispositif de freinage d'urgence (50) pour fournir une commande d'unités de commutation (31, 32, 33, 34) de l'unité d'entraînement (30) par le dispositif de freinage d'urgence (50) en priorité par rapport au dispositif de contrôle (20) et/ou pour empêcher la commande des unités de commutation (31, 32, 33, 34) par le dispositif de contrôle (20) en mode de défaut.

8. Dispositif (10) selon l'une quelconque des revendications précédentes,
**caractérisé en ce que**
le dispositif de surveillance (40) présente au moins une des unités de surveillance (41, 42) suivantes :
- un chien de garde (41) pour surveiller au moins une unité de contrôle (60) du dispositif de contrôle (20), de préférence un microcontrôleur (60),
- une unité de surveillance de l'énergie et de préférence de la tension (42) pour surveiller une alimentation principale en énergie (100) du dispositif de contrôle (20),
le dispositif de surveillance (40) étant réalisé de manière à passer en mode de défaut et/ou à activer le dispositif de freinage d'urgence (50) en mode de défaut détecté par déjà l'une des unités de surveillance (41, 42).

9. Dispositif (10) selon l'une quelconque des revendications précédentes,
**caractérisé en ce que**
le dispositif de surveillance (40) est réalisé de manière à modifier, pour activer le dispositif de freinage d'urgence (50) pour le freinage, un signal à une sortie de signal (21), en particulier une sortie de réinitialisation, du dispositif de contrôle (20), la sortie de signal (21) étant reliée à une entrée de signal (51) du dispositif de freinage d'urgence (50), pour initier une charge d'un condensateur (54) du dispositif de freinage d'urgence (50), qui est relié en particulier par l'intermédiaire d'une diode (D) à une alimentation principale en énergie (100), afin de commander par l'énergie électrique fournie par le condensateur (54) au moins une unité de commutation (33, 34) pour commuter un court-circuit de l'unité d'entraînement (30).

10. Dispositif (10) selon l'une quelconque des revendications précédentes,
**caractérisé en ce qu'**
un accumulateur d'énergie de secours (80) est relié au dispositif de freinage d'urgence (50) pour fournir une alimentation en énergie en plus de l'alimentation en énergie principale (100) du dispositif (10) pour l'initiation du freinage, en particulier pour charger un condensateur (54) du dispositif de freinage d'urgence (50).

11. Dispositif (10) selon l'une quelconque des revendications précédentes,
**caractérisé en ce qu'**
au moins un capteur (2) du dispositif de sécurité (1) est prévu pour détecter une position d'un élément de blocage, en particulier pour verrouiller une colonne de direction, et est connecté au dispositif de contrôle (20) pour initier le freinage en mode normal à l'aide de la position détectée, le dispositif de freinage d'urgence (50) étant réalisé pour initier le freinage indépendamment de la position détectée et/ou du capteur (2).

12. Procédé pour fournir une fonction de freinage d'urgence à un dispositif de sécurité (1) sous la forme d'un verrouillage de colonne de direction d'un véhicule, dans lequel les étapes suivantes sont effectuées :
- L'exécution d'une commande d'une unité d'entraînement (30) pour entraîner un mécanisme de sécurité du dispositif de sécurité (1) dans un mode normal, la commande comprenant également l'initiation d'un freinage de l'unité d'entraînement (30) dans le mode normal,
- Effectuer une surveillance de la commande,
- Commutation du mode normal en mode de défaut en fonction de la surveillance,
- L'activation d'un dispositiv de freinage d'urgence (50) uniquement en mode de défaut, ce qui permet d'initier le freinage de l'unité d'entraînement (30) en tant que freinage d'urgence,
**caractérisé en ce que**
le dispositif de freinage d'urgence (50) est connecté à au moins deux unités de commutation électroniques (33, 34) de l'unité d'entraînement (30), afin de commander les unités de commutation (33, 34) pour initier un court-circuit dans l'unité d'entraînement (30) et ainsi initier le freinage comme freinage par court-circuit.

13. Procédé selon la revendication 12,
**caractérisé en ce que**
le fonctionnement en mode de défaut est spécifique au fait que l'initiation du freinage en mode normal est entravée, en particulier par une entrave à une alimentation principale en énergie (100) pour la commande, la surveillance étant effectuée de préférence pour la détection de cette entrave sous la forme d'une surveillance de la tension de l'alimentation principale en énergie (100).
